# EUROPÄISCHE PATENTSCHRIFT

(11) **EP 1 597 894 B1**
(45) Veröffentlichungstag und Bekanntmachung des Hinweises auf die Patenterteilung: **28.11.2012**
(21) Anmeldenummer: 04701354.5
(22) Anmeldetag: 12.01.2004
(51) Int. Cl.: H04L 29/06, G06F 1/00

(54) **VERFAHREN ZUM PRÄMIENBASIERTEN EMPFEHLEN VON AUF EIN MOBILFUNKENDGERÄT HERUNTERLADBAREN INHALTSOBJEKTEN**
METHOD FOR CARRYING OUT THE PREMIUM-BASED RECOMMENDATION OF CONTENT OBJECTS THAT CAN BE DOWNLOADED TO A MOBILE TERMINAL
PROCEDE DE RECOMMANDATION FONDEE SUR UNE PRIME D'OBJETS DE CONTENU TELECHARGEABLES SUR UN TERMINAL DE TELEPHONIE MOBILE

(30) Priorität: 25.02.2003 DE 10308011
(43) Veröffentlichungstag der Anmeldung: 23.11.2005
(73) Patentinhaber: SIEMENS AKTIENGESELLSCHAFT, 80333 München (DE)
(72) Erfinder: SCHMIDT, Andreas, 38124 Braunschweig (DE); TRAUBERG, Markus, 38159 Velchede (DE)
(86) Internationale Anmeldenummer: PCT/EP2004/000135
(87) Internationale Veröffentlichungsnummer: WO 2004/077786

(56) Entgegenhaltungen:
- WO-A-03/034653
- US-A1- 2001 051 925
- MORI R ET AL: "SUPERDISTRIBUTION: AN ELECTRONIC INFRASTRUCTURE FOR THE ECONOMY OF THE FUTURE" JOHO SHORI GAKKAI RONBUNSHI - TRANSACTIONS OF INFORMATION PROCESSING SOCIETY OF JAPAN, TOKYO, JP, Bd. 38, Nr. 7, 1. Juli 1997 (1997-07-01), Seiten 1465-1472, XP002072402 ISSN: 0387-5806
- ANONYMOUS: "Open Standards for Digital Rights Management - Enable Paid Content Model, Version 1.0" FORUM NOKIA, [Online] 4. November 2002 (2002-11-04), Seiten 1-4, XP002283614 Gefunden im Internet: <URL:http://web.archive.org/web/2003070403 4824/ncsp.forum.nokia.com/downloads/nokia/ documents/Open_Stan_for_DRM_Enable_Paid_Co ntent_Model.pdf> [gefunden am 2004-06-08]

## Beschreibung

Die vorliegende Erfindung betrifft ein Verfahren zum prämienbasierten Empfehlen von auf ein Mobilfunkendgerät herunterladbaren Inhaltsobjekten.

Ein solches Verfahren wird beispielsweise in US 2001/0051925 beschrieben.

Ein derartiges Verfahren kann unter Anderem in einem Mobilfunkendgerät Anwendung finden.

Von der Open Mobile Alliance (OMA) wird derzeit ein Verfahren spezifiziert, mit dem digitale Inhalte vor Zugriffen durch unautorisierte Nutzer geschützt werden können und autorisierten Nutzern genau definierte Rechte zur Nutzung der Inhalte eingeräumt werden können. Dieses Verfahren wird als "Digital Rights Management" (DRM) bezeichnet.

Bisher wurden von der Open Mobile Alliance drei verschiedene Methoden zum Rechtemanagement definiert und verabschiedet. Die drei spezifizierten Methoden sind als "Forward-Lock", "Combined-Delivery" und "Separate Delivery" bekannt:
Bei "Forward-Lock" werden das oder die Medienelement(e) in einen neuen Datentyp eingepackt, der neben den Medienelementen zusätzlich einige Signalisierungsinformationen enthält. Mit dem darin neu definierten Datentyp ("application/oma.drm.message") ist die Beschränkung verknüpft, dass die darin enthaltenen Objekte nicht weitergeleitet, nicht im Dateisystem frei zugänglich abgespeichert und nicht verändert werden dürfen. Es ist somit eine spezielle Behandlung der Objekte dieses Typs durch ein Endgerät erforderlich.

Bei "Combined-Delivery" sind die Medienelemente in denselben Datentyp eingepackt wie bei der Methode "Forward-Lock". Zusätzlich ist darin jedoch noch eine Rechtebeschreibung enthalten, mit der weitere Restriktionen bezüglich der Nutzung der digitalen Medienobjekte festgelegt werden können. Beispiele hierfür sind die Beschränkung der Nutzungszeit, der Nutzungshäufigkeit oder der Nutzungsart (z.B. "nicht drucken").

Bei "Separate-Delivery" werden die Medienobjekte verschlüsselt in einen weiteren neu definierten Datentyp ("application/oma.drm.content"), nachfolgend als DRMC ("Digital Rights Management-Container") bezeichnet, eingepackt, der wiederum Signalisierungsinformationen enthält. Durch die Verschlüsselung kann der Inhalt vor unautorisierter Benutzung geschützt werden, auch wenn er von einer Anwendung ohne spezifische DRM-Funktionalität gehandhabt und in dem frei zugänglichen Speicherbereich eines Endgerätes abgelegt wird. Zusätzlich wird über einen sicheren Kanal ein Rechteobjekt (RO) zum Empfänger übertragen. In der textuellen Codierung ist dies der sogenannte Datentyp "application/vnd.oma.drm.rights+xml" und in der binären Codierung der sogenannte Typ "application/vnd.oma.drm.rights+wbxml".

In den beiden Methoden "Combined Delivery" und "Separate Delivery" spielt das Rechteobjekt (RO) eine zentrale Rolle. Dieses Objekt enthält die Informationen über die mit einem Inhaltsobjekt verknüpften Rechte (die Rechtebeschreibung) und bei Verwendung der Methode "Separate Delivery" auch den Schlüssel zum Entschlüsseln des verschlüsselten Inhaltsobjekts im DRMC.

Die Definition des Rechteobjektes ist durch die Spezifikation OMA-Download-DRMREL-vl_0-20020913-C in Verbindung mit einer XML DTD (eXtensible Markup Language Document Type Definition) gegeben, die unter http://www.openmobilealliance.org/docs/drmrel10.dtd abrufbar ist. In der aktuellen Version der Definition für ein Rechteobjekt sind einige Rechte und Einschränkungen enthalten. Zu den Rechten zählen:
- "Abspielen" (für audio-visuelle Inhalte),
- "Anzeigen" (für visuelle Inhalte (Bilder, Video)),
- "Ausführen" (für ausführbare Programme) und
- "Drucken" (für das Erstellen einer materiellen Kopie eines Inhalts wie z.B. Bilder, Texte oder Graphiken).

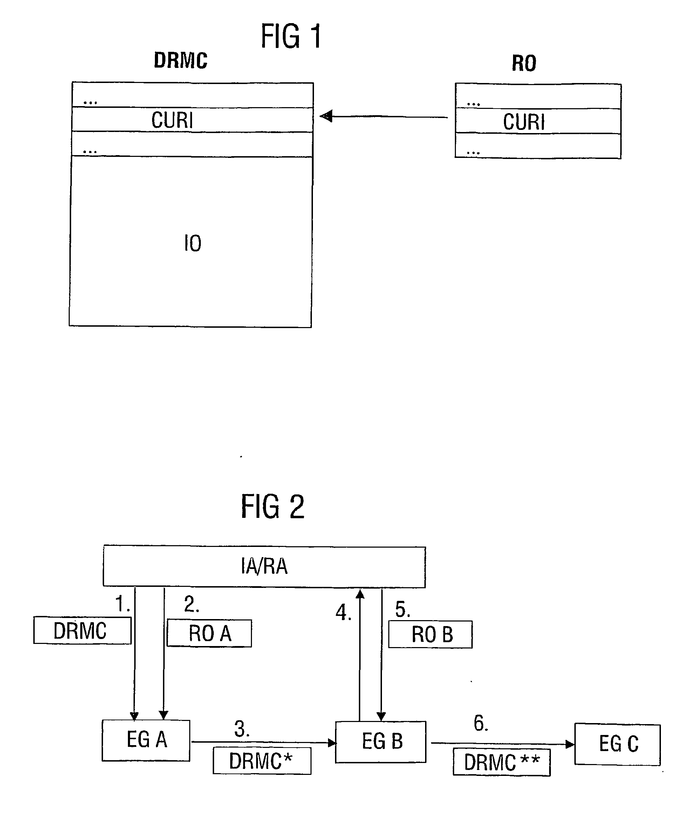

Bei der Methode "Separate Delivery" ist das Inhaltsobjekt (das zu schützende Medienobjekt) im DRMC enthalten. Die Figur 1 zeigt eine Referenzierung eines Inhaltsobjekts von einem Rechteobjekt aus in der Methode "Separate Delivery". Der DRMC weist zwei Bestandteile auf: Zum Einen das verschlüsselte Inhaltsobjekt (IO) und zum Anderen ein Kopfteil, das Steuerinformationen und eine Beschreibung des Inhaltsobjekts enthält. Zu den Steuerinformationen gehört eine Referenz ("Rechteaussteller") auf den Rechteanbieter (RA), die vom Endgerät genutzt werden kann, um weitere Rechte für das Inhaltsobjekt zu erhalten, und eine eindeutige Referenz, die so genannte "Content Uniform Resource Identifier" (CURI), die zur Referenzierung des Inhaltsobjekts aus dem Rechteobjekt (RO) heraus dient. Diese Referenz (in Form einer URI) wird im Rechteobjekt als Referenz verwendet, um die Verbindung zwischen Rechteobjekt und Inhaltsobjekt darzustellen.

Die Trennung des Inhalts von den Rechten hat konzeptionelle Vorteile. Durch die Verschlüsselung des Inhaltsobjekts im DRMC wird ein Zugriff auf das Inhaltsobjekt nur mit dem passenden Schlüssel möglich. Der DRMC wird damit wertlos, solange einem Besitzer des Containers kein passender Schlüssel zur Verfügung steht. Der DRMC kann damit beliebig wie eine andere Datei gehandhabt werden. Er kann kopiert werden und es ist auch möglich und erlaubt, den DRMC von einem Endgerät (von Nutzer A) auf ein anderes Endgerät (von Nutzer B) zu transferieren oder auch zu kopieren. Dieser Vorgang wird mit "Superdistribution" bezeichnet. Der empfangende Nutzer B eines DRMC kann Zugriff auf das Inhaltsobjekt im DRMC erhalten, wenn er die Referenz auf eine Ressource des Rechteanbieters nutzt (Rechteaussteller). Ein DRMC-Sendevorgang kann wie folgt ablaufen:
Das Endgerät des empfangenden Nutzers B erhält vom Endgerät des Nutzers A einen DRMC. Der Nutzer B entscheidet sich anschließend, für das im DRMC enthaltene Inhaltsobjekt passende Rechte zu erwerben. Danach ruft der Nutzer B die Ressource des Rechteanbieters ab, die im DRMC mit dem Kopffeld "Rechteaussteller" codiert ist. Der Rechteanbieter bietet daraufhin dem Nutzer B ein passendes Rechteobjekt zum Kauf an. Der Nutzer B nimmt das Angebot an, kauft ein Rechteobjekt und erhält in diesem den Schlüssel zur Entschlüsselung des Inhaltsobjekts.

Durch dieses Verfahren wird ein Austausch der Inhaltsobjekte zwischen Nutzern ermöglicht, wobei die Wertschöpfungsmöglichkeit für den Rechteanbieter erhalten bleibt. Er kann das Herunterladen eines Rechteobjekts durch den Nutzer B wieder vergebühren, z.B. identisch zum ersten Herunterladen eines DRMC mit zugehörigem Rechteobjekt durch den Nutzer A.

Es ist dabei ein Interesse eines Anbieters von Inhaltsobjekten, dass ein zufriedener Nutzer A ein heruntergeladenes Inhaltsobjekt einem anderen Nutzer B empfiehlt und damit die Basis für einen zusätzlichen Verkauf eines passenden Rechteobjekts schafft. Um das beschriebene und vom Anbieter des Inhaltsobjekts erwünschte Verhalten des Nutzers A zu fördern, ist es wünschenswert, dem Nutzer A eine Prämie anzubieten, die der Anbieter des Inhaltsobjekts dem Nutzer A bei einer erfolgreichen Empfehlung gewährt.

Dies ist bei dem beschriebenen DRMC-Sendevorgang jedoch nur eingeschränkt möglich, indem ein Rechteanbieter eine eindeutig dem ersten empfangenden Nutzer A zugeordnete Referenz (Kopffeld "Rechteaussteller") in den DRMC integriert. Ein nachfolgend von Nutzer B mit dieser Referenz eingeleiteter Herunterladevorgang für ein Rechteobjekt ließe eine Rückführung auf Nutzer A seitens des Rechteanbieters zu. Der beschriebene Vorgang hat allerdings den Nachteil, dass sich einem DRMC nicht dynamisch unterschiedlichen Nutzern und Prämien zuordnen lässt. Ein mehrmaliges Weiterleiten durch verschiedene Nutzer mit jeweils neuer und individueller Prämienbeschreibung und -gewährung ist damit nicht möglich.

Somit liegt der vorliegenden Erfindung die Aufgabe zu Grunde, ein Verfahren zum prämienbasierten Empfehlen von auf ein Mobilfunkendgerät herunterladbaren Inhaltsobjekten bereitzustellen, welches es ermöglicht, die Information, dass ein Herunterladevorgang eines Nutzers B durch die Empfehlung des Inhaltsobjekts von einem Nutzer A motiviert wurde, an den Anbieter des Inhaltsobjekts zu übermitteln, so dass dieser die Möglichkeit hat, dem empfehlenden Nutzer A eine Prämie zu gewähren, wobei eine dynamische Zuweisung eines Prämienangebots für den ersten Empfänger eines Inhaltsobjekts und auch jeden weiteren Empfänger möglich sein soll.

Diese Aufgabe wird durch ein Verfahren zum prämienbasierten Empfehlen von auf ein Mobilfunkendgerät herunterladbaren Inhaltsobjekten mit den Merkmalen des Anspruchs 1 und ein Endgerät mit den Merkmalen des Anspruchs 6 gelöst.

Das Verfahren zum prämienbasierten Empfehlen von auf ein Mobilfunkendgerät herunterladbaren Inhaltsobjekten weist die Verfahrensschritte:
- Senden eines ersten Inhaltsobjekts von einem Inhalteanbieter an ein erstes Endgerät;
- Senden eines ersten Rechteobjekts von einem Rechteanbieter an das erste Endgerät;
- Senden des Inhaltsobjekts zusammen mit einer Identifikation des ersten Endgeräts, von dem ersten Endgerät zu dem zweiten Endgerät; und
- Anfordern eines zweiten Rechteobjekts von dem Rechteanbieter durch das zweite Endgerät, wobei das zweite Rechteobjekt dem zweiten Endgerät ermöglicht, das Inhaltsobjekt zu nutzen, und wobei dem Rechteanbieter die Identifikation des ersten Endgeräts übermittelt wird und dieser daraufhin dem ersten Endgerät eine Prämie zuordnen kann,
auf.

Bei den Inhaltsobjekten kann es sich um jede Art von Daten handeln, die in einem Mobilfunkendgerät empfangen werden können, wie beispielsweise Bild-, Musik- oder Videodateien. Die Inhaltsobjekte befinden sich bevorzugt in einem "Digital Rights Management Container" - DRMC, wie er eingangs im Zusammenhang mit Figur 1 beschrieben wurde. In diesem Fall wird der DRMC enthaltend das Inhaltsobjekt übermittelt. Bei den Inhalteanbieter bzw. Rechteanbieter kann es sich um ein und denselben Anbieter handeln. In der Praxis wird dies in den meisten Fällen der Netzwerkanbieter sein. Bei den Endgeräten kann es sich um jede Art von Mobilfunkendgeräten handeln.

In einer Weiterbildung der vorliegenden Erfindung wird mit dem Inhaltsobjekt zusätzlich eine Referenz auf den Rechteanbieter an das zweite Endgerät übersandt. Bevorzugt ist diese Referenz in einem DRMC enthalten. Durch diese Referenz weiß das zweite Endgerät, von wem es das zweite Rechteobjekt anfordern kann.

Um Missbrauch zu vermeiden, und den Zugriff auf das Inhaltsobjekt kontrollieren zu können, ist in einer bevorzugten Ausführungsform die ergänzte Identifikation für das erste Endgerät oder die Referenz auf den Rechteanbieter mit integrierter Identifikation für das erste Endgerät mit einem privaten Schlüssel des ersten Endgeräts signiert.

In einer weiteren bevorzugten Ausführungsform der vorliegenden Erfindung signiert das erste Endgerät die vom Rechteanbieter im Rechteobjekt erhaltene Identifikation mit seinem privaten Schlüssel und integriert die Signatur in den Datencontainer bzw. das Inhaltsobjekt. Die Signatur wird von dem zweiten Endgerät zusammen mit der Identifikation für das erste Endgerät in die Anfrage für ein neues Rechteobjekt integriert und zum Rechteanbieter übertragen. Der Rechteanbieter verifiziert anhand der Signatur die Authentizität des ersten Endgeräts und kann damit sicher sein, dass die Identifikation für das erste Endgerät tatsächlich vom ersten Endgerät in den Datencontainer bzw. das Inhaltsobjekt integriert wurde.

Bevorzugt enthält das erste Rechteobjekt eine Information, ob der Nutzer des ersten Endgeräts bei erfolgreicher Empfehlung des Inhaltsobjekt an einen anderen Nutzer eine Prämie erhält. Weiter bevorzugt enthält das erste Rechteobjekt eine Beschreibung der Prämie, die der Nutzer des ersten Endgeräts erhalten kann. So kann es sich bei der Prämie z.B. um eine Gutschrift auf dem (Mobilfunk-)Nutzerkonto oder auch ein auf dem Endgerät nutzbaren Inhalt handeln (z.B. ein Musikstück, eine Applikation, ein Spiel oder ein zusätzlicher Level eines Spiels, eventuell auch in Form eines zusätzlichen Rechteobjekts).

In einer bevorzugten Ausführungsform enthält das erste Rechteobjekt die Identifikation des ersten Endgeräts, welche das erste Endgerät dem Inhaltsobjekt vor dem Senden zu dem zweiten Endgerät hinzufügt.

In einer Weiterbildung der vorliegenden Erfindung enthält das erste Rechteobjekt eine Signalisierung, ob eine oder mehrere bereits in dem Inhaltsobjekt enthaltene Identifikation(en) vorhergehender Endgeräte ersetzt und/oder ergänzt werden soll(en). Es kann sich dabei um eine Liste handeln, bestehend aus separaten Elementen oder einem Element mit mehreren Bestandteilen. Durch die Weiterbildung ist eine individuelle Anpassung von Prämien an den jeweiligen empfehlenden Nutzer möglich. Denkbar ist beispielsweise, dass immer nur der ursprünglich empfehlende Nutzer eine Prämie auch bei mehrmaliger Weiterempfehlung erhält. Alternativ kann jeweils der letzte empfehlende Nutzer honoriert werden. Eine anteilsmäßige Aufteilung ist auch denkbar.

Ferner kann das erste Rechteobjekt Informationen hinsichtlich von mit einer Prämie verknüpften Konditionen und/oder Einschränkungen, insbesondere zeitlicher Gültigkeit der Prämie, enthalten. Beispielsweise ist eine Prämie nur bei einem bestimmten Anbieter einlösbar oder die Prämie muss bis Ende des nächsten Monats eingelöst werden.

In einer weiteren bevorzugten Ausführungsform der vorliegenden Erfindung übermittelt der Rechteanbieter dem ersten Endgerät eine Bestätigung für die Gewährung der Prämie, so dass dessen Nutzer ein Prämienkonto verwalten kann.

Gemäß einer Weiterbildung der vorliegenden Erfindung fordert das zweite Endgerät ein an die Eigenschaften des zweiten Endgeräts angepasstes Inhaltsobjekt von dem Anbieter der Inhaltsobjekte an. Nicht alle Mobilfunkendgeräte haben die gleichen Möglichkeiten zum Nutzen von Inhaltsobjekten. Beispielsweise weist nur ein erste Endgerät ein GPS (Global Positioning System)-Modul zur Ortsbestimmung auf und das zweite Endgerät kann ein darauf abgestimmtes Inhaltsobjekt nicht nutzen. In einem solchen Fall kann das zweite Endgerät ein an seine Eigenschaften angepasstes Inhaltsobjekt, beispielsweise ein auf eine andere Ortsbestimmungsmethode basierendes, angepasstes Inhaltsobjekt anfordern. Denkbar ist auch, dass Inhaltsobjekte in ihrem Inhalt soweit reduziert werden, dass sie von einem bestimmten Mobilfunkendgerät genutzt werden können. Das empfangende Endgerät muss dazu dem Anbieter der Inhaltsobjekte signalisieren, welche Inhaltsobjekte es verarbeiten kann.

Weiter bevorzugt zeigt das erste und/oder das zweite Endgerät deren Nutzern nur hinsichtlich der Nutzung des Inhaltsobjekts relevante Informationen des Inhaltsobjekts an. Interne, d.h. für den Nutzer hinsichtlich der Entscheidung, ob er ein Inhaltsobjekt herunterladen will, nicht interessante Information werden ihm dabei nicht angezeigt.

In einer Weiterbildung der vorliegenden Erfindung wird ein sogenannter "Hash-Wert", d.h. eine Art Prüfsumme oder eine Signatur für den DRMC und/oder das Inhaltsobjekt berechnet. Bei einer Änderung im DRMC bzw. dem Inhaltsobjekt - wie sie bei der vorliegenden Erfindung zur Integration der Identifikation für den Nutzer des ersten Endgeräts nötig ist - wird der Hash-Wert oder die Signatur demnach ungültig, wenn die Berechnung des Wertes auch die Änderung mit einschließt. Um dies zu verhindern, sollte die Identifikation bzw. die Referenz auf den Rechteaussteller, in die eine Identifikation integriert und/oder angehängt wird, aus der Berechnung ausgeschlossen werden. Es sollte demnach ein Hash-Wert oder eine Signatur nur für das Informationsobjekt oder für das Informationsobjekt und einen Teil des DRMC-Kopffeldes berechnet werden. Eine Neuberechnung des Hash-Wertes und/oder der Signatur für das Inhaltsobjekt durch das Endgerät sollte dabei vermieden werden.

Die eingangs gestellte Aufgabe wird auch durch ein Mobilfunkendgerät zur Verwendung bei dem erfindungsgemäßen Verfahren gelöst.

Das erfindungsgemäße Verfahren besteht aus Erweiterungen zu dem eingangs dargestellten DRMC-Sendevorgang mit dem Ziel, dem Inhalteanbieter (IA) bzw. Rechteanbieter (RA) eine Erkennung und Zuordnung eines Empfehlungsvorgangs zu ermöglichen und auf dieser Basis einen empfehlenden Nutzer A für die erfolgreiche Empfehlung eines Inhaltsobjekts an den Nutzer B mit einer Prämie belohnen zu können.

Bei der vorliegenden Erfindung wird durch Nachrichtenfluss und Signalisierung ermöglicht, dass der Rechteanbieter aus der Kommunikation mit dem Endgerät des Nutzers B (EG B) schließen kann, dass die Anfrage von EG B für ein Rechteobjekt auf der Empfehlung des DRMC bzw. DRMC* durch EG A basiert. Die Zuordnung basiert auf einer Identifikation, die ein Rechteanbieter für einen Nutzer bestimmt oder die einen Nutzer eindeutig kennzeichnet (z.B. eine Email-Adresse). Vorzugsweise wird die Identifikation vom Rechteanbieter generiert und zunächst an den Nutzer A übertragen. Dies ermöglicht auch eine Identifikation, die eindeutig der Transaktion zugeordnet wird und die auch so geartet sein kann, dass sie die Identität des Nutzers A gegenüber Dritten nicht offenbart. Von dem Nutzer A wird die Identifikation zusammen mit dem Inhaltsobjekt an den Nutzer B weitergegeben und von diesem wiederum an den Rechteanbieter übermittelt. Die Identifikation für Nutzer A kann vom Rechteanbieter an den Nutzer A entweder integriert in den DRMC oder integriert in das Rechteobjekt oder separat erfolgen. Vorteilhaft ist eine Integration in das Rechteobjekt, da dies nicht voraussetzt, dass der DRMC vom Rechteanbieter an das EG A übertragen wird.

Denkbar ist, ein Inhaltsobjekt integriert in einem DRMC auch mehrfach von unterschiedlichen Nutzern bzw. deren Endgeräten weiterzuleiten. Um für jeden Nutzer dieselben Ausgangsvoraussetzungen zu schaffen, ist es daher sinnvoll, die für eine Prämierung einer Empfehlung notwendigen Informationen in das Rechteobjekt zu integrieren, da dieses jedem Nutzer individuell zugestellt wird. Dabei ist eine Möglichkeit, dass immer nur der letzte Weiterleitungsvorgang des DRMC, also die Empfehlung des Inhaltsobjekts, für die Zuordnung einer Prämie durch einen Rechteanbieter maßgeblich ist. Alternativ ist auch die Prämierung des ersten Empfängers eines DRMC für alle nachfolgenden erfolgreichen Empfehlungsvorgänge oder auch die Prämierung einiger oder aller beteiligten Nutzer in einer Kette von Empfehlungen möglich.

Vorteilhaft an dem erfindungsgemäßen Verfahren ist, dass für jeden Weiterleitungs-/Empfehlungsvorgang eine individuelle Prämie durch den Rechteanbieter festgelegt werden kann. Dadurch kann die Prämie abhängig gemacht werden von dem empfehlenden Nutzer, dem Zeitpunkt, der Historie der Weiterleitungen des Inhalts oder beispielsweise von der Art des Inhalts. Es ist ferner möglich, für jeden Weiterleitungsvorgang jeweils den letzten weiterleitenden Nutzer zu belohnen. Alternativ können für jeden Weiterleitungsvorgang auch vorherige Nutzer belohnt werden. Darüber hinaus kann dem empfehlenden Nutzer die Prämie angezeigt und beschrieben werden. Weiter vorteilhaft ist, dass dem Nutzer, der die Empfehlung nutzt, die Identität des empfehlenden Nutzers verborgen bleiben kann, wenn der Rechteanbieter dem empfehlenden Nutzer eine einmalige Identifikation zuweist, aus der ein empfangender Nutzer nicht auf die Identität des empfehlenden Nutzers zurückschließen kann.

Die Erfindung wird im Folgenden unter Hinweis auf die beigefügten Zeichnungen anhand eines Ausführungsbeispiels näher erläutert. Die dort dargestellten Merkmale und auch die bereits oben beschriebenen Merkmale können nicht nur in der genannten Kombination, sondern auch einzeln oder in anderen Kombinationen erfindungswesentlich sein. Es zeigen:
- Figur 1: eine Referenzierung eines Inhaltsobjekts von einem Rechteobjekt aus bei der Methode "Separate Delivery";
- Figur 2: einen Nachrichtenfluss bei der Empfehlung eines DRMC übertragen von EG A an EG B; und
- Figur 3: einen Nachrichtenfluss bei der Empfehlung eines DRMC übertragen vom EG A an das EG B.

Figur 1 wurde bereits in der Einleitung der Beschreibung erläutert, so dass hier darauf verwiesen wird.

Figur 2 zeigt als Ausführungsbeispiel ein Endgerät EG A eines Nutzers A., ein Endgerät EG B eines Nutzers B, einen Inhaltsanbieter IA und einen Rechteanbieter RA. Ein Inhaltsobjekt wird in einem DRM-Container DRMC vom Inhaltsanbieter IA an das Endgerät EG A des Nutzers A übertragen (Schritt 1). Der DRMC entspricht in diesem Ausführungsbeispiel dem in Figur 1 gezeigten DMRC. Alternativ kann der DRMC auch von einem anderen Endgerät zum EG A übertragen worden sein. Ein Rechteobjekt RO A wird danach vom Rechteanbieter RA zum Endgerät EG A übertragen (Schritt 2). Neben den bekannten Informationen enthält es eines oder mehrere der folgenden Elemente:
a) eine Signalisierung, dass der Nutzer A bei erfolgreicher Empfehlung des DRMCs an andere Nutzer eine Prämie erhalten kann;
b) eine Beschreibung der Prämie, die der Nutzer A nach erfolgreicher Empfehlung erhalten kann;
c) eine Identifikation, die das Endgerät von Nutzer A in den DRMC integrieren soll, bevor der DRMC an einen anderen Nutzer, z.B. an Nutzer B, weitergeleitet wird;
d) eine Beschreibung von möglichen Konditionen und/oder Einschränkungen, die mit einer Prämie für eine Empfehlung verknüpft werden (z.B. eine Gültigkeitsperiode, o.ä.);
e) eine Signalisierung, ob im DRMC schon vorhandene Informationen gemäß c) ersetzt oder ergänzt werden sollen.

Das Endgerät EG A extrahiert diese Informationen aus dem Rechteobjekt RO A und zeigt sie entweder komplett oder in Auszügen dem Nutzer des Endgeräts EG A an. Falls der Nutzer A sich für eine Weiterleitung bzw. Empfehlung des Inhaltsobjekts entscheidet, oder auch unabhängig davon, integriert das EG A die Identifikation für den Nutzer A in den DRMC, der dadurch zum DRMC* wird. Als Kennzeichnung der Authentizität der Identifikation kann das EG A die Identifikation auch mit dem privaten Schlüssel des Gerätes signieren. Die Signatur kann vom Rechteanbieter RA später überprüft werden, um sicherzustellen, dass auch tatsächlich die eingetragene Identifikation von dem korrekten EG A eingefügt wurde. Anschließend wird der DRMC von dem EG A zu dem EG B transportiert (Schritt 3). Dies kann beispielsweise per Multimedia Service MMS, Email, Bluetooth, Infrarotschnittstelle IrDA, Speicherkarte, Kabel o.ä. erfolgen. Das Endgerät EG B empfängt den DRMC* und bietet dem Nutzer B an, für das enthaltene Inhaltsobjekt ein Rechteobjekt RO B vom Rechteanbieter herunterzuladen. Wird dies von dem Nutzer B bestätigt, verwendet das EG B die Referenz auf die Ressource des Rechteanbieters ("Rechteaussteller") und außerdem die in DRMC* enthaltene Identifikation für den Nutzer A, um ein Rechteobjekt RO B vom Rechteanbieter RA anzufordern (Schritt 4). Dies kann z.B. dadurch erfolgen, in dem die Identifikation in definierter Art und Weise an die Referenz (URL - Uniform Resource Locator) des Rechteanbieters RA angehängt wird. Der Rechteanbieter RA erhält dadurch die Information, wer den DRMC* an den Nutzer B weitergeleitet hat und kann diesem eine Prämie zuordnen. Bei diesem Vorgang kann das EG B dem Nutzer B optional auch die Informationen anzeigen, dass Nutzer A seine Identifikation in DRMC* integriert hat und dass Nutzer A eine Prämie erhalten wird, wenn der Nutzer B ein Rechteobjekt RO B beim Rechteanbieter anfordert bzw. herunterlädt. Danach folgt die Übertragung eines RO vom RA zum Endgerät EG B (Schritt 5).

Weiterhin ist es denkbar, dass der RA dem EG A und/oder dem EG B eine Bestätigung für die Gewährung der Prämie zustellt (in Figur 2 nicht dargestellt). Dies kann für den EG B integriert in das RO oder separat erfolgen. Die Endgeräte können eine gegebenenfalls erhaltene Benachrichtigung über die Gewährung der Prämie dem Nutzer anzeigen. Die Prämie ist von der Art her vom DRM-Verfahren unabhängig.

Anschließend kann der Vorgang wieder von vorn beginnen. Der DRMC (bzw. DRMC*) liegt auf dem EG B vor. Mit dem neuen Rechteobjekt (RO B) können wieder aktuelle Daten für einen potentiellen nächsten Empfehlungsvorgang durch Nutzer B an das EG B übertragen werden (Signalisierung für eine Prämie bei Empfehlung, Beschreibung der Prämie und Identifikation für EG B/Nutzer B, etc.). Schritt 6 zeigt entsprechend eine Weiterleitung des DRMC** zu einem weiteren Endgerät EG C.

Die Identifikation für EG B/Nutzer B kann von EG B entweder anstatt der bisherigen Identifikation für EG A/Nutzer A oder zusätzlich in den DRMC* integriert werden. Dies kann zusätzlich im Rechteobjekt signalisiert werden.

Neben dem vorstehend beschriebenen Ausführungsbeispiel, nur ein passendes Rechteobjekt auf EG B herunterzuladen, besteht auch die Möglichkeit ein für die Eigenschaften von EG B angepasstes Inhaltsobjekt herunterzuladen. Dies wird nötig, wenn das Inhaltsobjekt im DRMC* nicht oder nicht optimal auf die Eigenschaften von EG B abgestimmt ist. Das EG B kann dies anfänglich durch Überprüfung der in DRMC* enthaltenen Beschreibung der Eigenschaften vom Inhaltsobjekt feststellen. Alternativ kann auch der Rechteanbieter RA auf Basis der vom Endgerät EG B übermittelten Beschreibung seiner Eigenschaften feststellen, dass ein anderer DRMC für EG B besser geeignet ist. Das EG B kann dann alternativ zur alleinigen Anforderung des Rechteobjekts, wie in Figur 1 dargestellt, zusätzlich noch ein besser geeignetes DRMC*** anfordern. Dieser Vorgang ist unabhängig von der Prämierung.

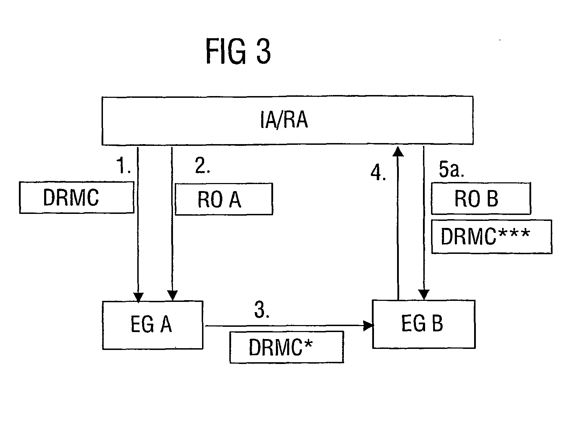

Figur 3 zeigt ein Ausführungsbeispiel mit einem entsprechenden Nachrichtenfluss bei der Empfehlung eines DRMC übertragen vom EG A an das EG B. Die Schritte 1 bis 4 entsprechen dabei den Schritten 1 bis 4 gemäß Figur 2. In Schritt 5a wird jedoch zusätzlich zum Rechteobjekt RO B ein DRM-Container DRMC*** mit einer Variante des Inhaltsobjekts, die für das Endgerät EG B besonders geeignet ist, vom Inhalteanbieter IA bzw. Rechteanbieter RA an das Endgerät EG B übertragen.

Alternativ zu dem vorgestellten Verfahren ist auch eine Variante denkbar, bei der die Empfehlung vom EG A über den RA zum EG B gelangt. Dazu muss der EG A dem RA die Kontaktinformation des EG B mitteilen, worauf der RA eine Nachricht oder einen DRMC an das EG B schickt, was z.B. per WAP (Wireless Application Protocol)-Push-Technologie erfolgen kann.

## Patentansprüche

1. Verfahren zum Empfehlen von Inhaltsobjekten, aufweisend die Verfahrensschritte:
- Senden eines ersten Inhaltsobjekts (DRMC) von einem Inhalteanbieter oder von einem Endgerät an ein erstes Endgerät (EG A),
- Senden eines ersten Rechteobjekts (RO A) separat vom Inhaltsobjekt von einem Rechteanbieter (RA) an das erste Endgerät (EG A), wobei das erste Rechteobjekt (RO A) dem ersten Endgerät (EG A) ermöglicht, das Inhaltsobjekt zu nutzen, und wobei das erste Rechteobjekt (RO A) eine Identifikation des ersten Endgeräts (EG A) enthält,
- Extrahieren der Identifikation des ersten Endgeräts (EG A) aus dem ersten Rechteobjekt (RO A),
- Integrieren der extrahierten Identifikation des ersten Endgeräts (EG A) in das Inhaltsobjekt durch das erste Endgerät (EG A),
- Senden des Inhaltsobjekts (DRMC*) zusammen mit der Identifikation des ersten Endgeräts (EG A), von dem ersten Endgerät (EG A) zu einem zweiten Endgerät (EG B), und
- Anfordern eines zweiten Rechteobjekts (RO B) von dem Rechteanbieter (RA) durch das zweite Endgerät (EG B), wobei das zweite Rechteobjekt (RO B) dem zweiten Endgerät (EG B) ermöglicht, das Inhaltsobjekt zu nutzen, und wobei dem Rechteanbieter (RA) die Identifikation des ersten Endgeräts (EG A) übermittelt wird, um dem Rechteanbieter zu ermöglichen, dem ersten Endgerät den Empfehlungsvorgang bezüglich des Inhaltsobjekts zuzuordnen,
wobei eine Signatur für das Inhaltsobjekt (DRMC) unter Ausschluss der Identifikation für das erste Endgerät (EG A) berechnet wird.

2. Verfahren nach Anspruch 1, bei dem der Rechteanbieter auf die Übermittlung der Identifikation des/der vorhergehenden Endgeräte hin dem ersten Endgerät (EG A) oder den vorhergehenden Endgeräten eine Prämie zuordnet.

3. Verfahren nach Anspruch 2, bei dem beim Integrieren der Identifikation des ersten Endgeräts (EG A) in das Inhaltsobjekt eine bereits in dem Inhaltsobjekt befindliche Identifikation durch die Identifikation des ersten Endgeräts (EG A) ersetzt wird.

4. Verfahren nach einem der Ansprüche 1 bis 3, bei dem der Rechteanbieter (RA) das angeforderte zweite Rechteobjekt (RO_B) zusammen mit der Identifikation des zweiten Endgeräts (EG B) zum zweiten Endgerät (EG B) überträgt.

5. Verfahren nach Anspruch 4, bei dem das zweite Endgerät (EG B) die Identifikation des zweiten Endgeräts (EG A) aus dem zweiten Rechteobjekt extrahiert, anstatt der Identifikation des ersten Endgeräts (EG A) in dem Inhaltsobjekt integriert und an ein drittes Endgerät (EG C) weiterleitet.

6. Erstes Endgerät zur Verwendung bei einem Verfahren nach einem der Ansprüche 1 bis 5, aufweisend
- Mittel zum Empfangen eines ersten Inhaltsobjekts (DRMC) von einem Inhalteanbieter (IA) oder von einem Endgerät durch das erste Endgerät (EG A)
- Mittel zum Empfangen eines ersten Rechteobjekts (RO A) separat vom Inhaltsobjekt von einem Rechteanbieter (RA) durch das erste Endgerät (EG A), wobei das erste Rechteobjekt (RO A) eine Identifikation des ersten Endgerätes enthält,
- Mittel zum Extrahieren der Identifikation des ersten Endgeräts (EG A) aus dem ersten Rechteobjekt (RO A),
- Mittel zum Integrieren der extrahierten Identifikation des ersten Endgeräts (EG A) in das Inhaltsobjekt durch das erste Endgerät (EG A), und
- Mittel zum Senden des Inhaltsobjekts (DRMC*) zusammen mit der Identifikation des ersten Endgeräts (EG A) von dem ersten Endgerät (EG A) zu einem zweiten Endgerät (EG B),
wobei das Inhaltsobjekt eine unter Ausschluss der Identifikation für das erste Endgerät (EG A) berechnete Signatur aufweist.

## Claims

1. Method for recommending content objects, comprising the method steps of:
- sending a first content object (DRMC) from a content provider or from a terminal device to a first terminal device (EG A),
- sending a first rights object (RO A) separately from the content object from a rights provider (RA) to the first terminal device (EG A), with the first rights object (RO A) enabling the first terminal device (EG A) to use the content object and with the first rights object (RO A) containing an identification of the first terminal device (EG A),
- extracting the identification of the first terminal device (EG A) from the first rights object (RO A),
- integrating the extracted identification of the first terminal device (EG A) into the content object by the first terminal device (EG A),
- sending the content object (DRMC*) together with the identification of the first terminal device (EG A) from the first terminal device (EG A) to a second terminal device (EG B), and
- requesting a second rights object (RO B) from the rights provider (RA) by the second terminal device (EG B), with the second rights object (RO B) enabling the second terminal device (EG B) to use the content object and with the identification of the first terminal device (EG A) being communicated to the rights provider (RA) in order to enable the rights provider to assign the recommendation process in respect of the content object to the first terminal device,
wherein a signature for the content object (DRMC) is calculated with exclusion of the identification for the first terminal device (EG A).

2. Method according to claim 1, wherein in response to the communication of the identification of the preceding terminal device(s) the rights provider assigns a premium to the first terminal device (EG A) or the preceding terminal devices.

3. Method according to claim 2, wherein when the identification of the first terminal device (EG A) is integrated into the content object an identification already contained in the content object is replaced by the identification of the first terminal device (EG A).

4. Method according to one of claims 1 to 3, wherein the rights provider (RA) transfers the requested second rights object (RO B) to the second terminal device (EG B) together with the identification of the second terminal device (EG B).

5. Method according to claim 4, wherein the second terminal device (EG B) extracts the identification of the second terminal device (EG B) from the second rights object, integrates it in the content object in place of the identification of the first terminal device (EG A) and forwards it to a third terminal device (EG C).

6. First terminal device for use with a method according to one of claims 1 to 5, comprising
- means for receiving a first content object (DRMC) from a content provider (IA) or from a terminal device by the first terminal device (EG A),
- means for receiving a first rights object (RO A) separately from the content object from a rights provider (RA) by the first terminal device (EG A), with the first rights object (RO A) containing an identification of the first terminal device,
- means for extracting the identification of the first terminal device (EG A) from the first rights object (RO A),
- means for integrating the extracted identification of the first terminal device (EG A) into the content object by the first terminal device (EG A), and
- means for sending the content object (DRMC*) together with the identification of the first terminal device (EG A) from the first terminal device (EG A) to a second terminal device (EG B),
wherein the content object has a signature calculated with exclusion of the identification for the first terminal device (EG A).

## Revendications

1. Procédé pour recommander des objets de contenu, comportant les étapes de procédé suivantes :
- envoi d'un premier objet de contenu (DRMC) d'un fournisseur de contenus ou d'un terminal à un premier terminal (EG A) ;
- envoi d'un premier objet de droits (RO A) séparément de l'objet de contenu d'un fournisseur de droits (RA) au premier terminal (EG A), le premier objet de droits (RO A) permettant au premier terminal (EG A) d'utiliser l'objet de contenu et le premier objet de droits (RO A) contenant une identification du premier terminal (EG A) ;
- extraction de l'identification du premier terminal (EG A) hors du premier objet de droits (RO A) ;
- intégration de l'identification extraite du premier terminal (EG A) dans l'objet de contenu par le premier terminal (EG A) ;
- envoi de l'objet de contenu (DRMC*) avec l'identification du premier terminal (EG A) du premier terminal (EG A) à un deuxième terminal (EG B) ; et
- demande d'un deuxième objet de droits (RO B) au fournisseur de droits (RA) par le deuxième terminal (EG B), le deuxième objet de droits (RO B) permettant au deuxième terminal (EG B) d'utiliser l'objet de contenu et l'identification du premier terminal (EG A) étant transmise au fournisseur de droits (RA) pour permettre au fournisseur de droits d'associer l'opération de recommandation au premier terminal en ce qui concerne l'objet de contenu,
une signature pour l'objet de contenu (DRMC) étant calculée avec exclusion de l'identification pour le premier terminal (EG A).

2. Procédé selon la revendication 1, dans lequel le fournisseur de droits, suite à la transmission de l'identification du ou des terminaux précédents, associe une prime au premier terminal (EG A) ou aux terminaux précédents.

3. Procédé selon la revendication 2, dans lequel, lors de l'intégration de l'identification du premier terminal (EG A) dans l'objet de contenu, une identification qui se trouve déjà dans l'objet de contenu est remplacée par l'identification du premier terminal (EG A).

4. Procédé selon l'une des revendications 1 à 3, dans lequel le fournisseur de droits (RA) transmet au deuxième terminal (EG B) le deuxième objet de droits demandé (RO-B) avec l'identification du deuxième terminal (EG B).

5. Procédé selon la revendication 4, dans lequel le deuxième terminal (EG B) extrait l'identification du deuxième terminal (EG A) hors du deuxième objet de droits, l'intègre dans l'objet de contenu au lieu de l'identification du premier terminal (EG A) et la retransmet à un troisième terminal (EG C).

6. Premier terminal destiné à être utilisé dans un procédé selon l'une des revendications 1 à 5, comportant :
- des moyens pour recevoir un premier objet de contenu (DRMC) d'un fournisseur de contenus (IA) ou d'un terminal par le premier terminal (EG A) ;
- des moyens pour recevoir un premier objet de droits (RO A) séparément de l'objet de contenu d'un fournisseur de droits (RA) par le premier terminal (EG A), le premier objet de droits (RO A) contenant une identification du premier terminal ;
- des moyens pour extraire l'identification du premier terminal (EG A) hors du premier objet de droits (RO A) ;
- des moyens pour intégrer l'identification du premier terminal (EG A) qui a été extraite dans l'objet de contenu par le premier terminal (EG A) ; et
- des moyens pour envoyer l'objet de contenu (DRMC*) avec l'identification du premier terminal (EG A) du premier terminal (EG A) à un deuxième terminal (EG B),
l'objet de contenu comportant une signature calculée avec exclusion de l'identification pour le premier terminal (EG A).
